# EUROPEAN PATENT APPLICATION

(11) **EP 4 827 152 A1**
(43) Date of publication of application: **21.10.2026**
(21) Application number: 25738553.4
(22) Date of filing: 10.01.2025
(51) Int. Cl.: H04W 24/02

(54) **MEASUREMENT TIME CONFIGURATION METHOD AND APPARATUS, CHIP, AND STORAGE MEDIUM**

(30) Priority: 12.01.2024 CN 202410058587
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Epping - Hermann - Fischer
(86) International application number: PCT/CN2025/071717
(87) International publication number: WO 2025/149026

(57) **Abstract**

Embodiments of this application provide a measurement time configuration method and apparatus, a chip, and a storage medium. The method includes: A terminal device reports, to a network device by monitoring or predicting whether transmission overlaps a measurement time, first indication information indicating information about a conflict between the transmission and the measurement time. The network device adjusts, based on the conflict information indicated by the first indication information, a configuration of a first measurement time that overlaps transmission, to reduce overlap between the transmission and the measurement time during subsequent transmission. According to the method in this application, impact of the measurement time on the transmission can be mitigated, thereby improving transmission efficiency, and improving user experience.

## Description

This application claims priority to Chinese Patent Application No. 202410058587.5, filed with the China National Intellectual Property Administration on January 12, 2024 and entitled "MEASUREMENT TIME CONFIGURATION METHOD AND APPARATUS, CHIP, AND STORAGE MEDIUM", which is incorporated herein by reference in its entirety.

### TECHNICAL FIELD

This application relates to the field of communication technologies, and in particular, to a measurement time configuration method and apparatus, a chip, and a storage medium.

### BACKGROUND

With development of communication technologies, in an existing wireless communication system, a measurement gap (Measurement Gap, MG) used for measurement is provided. The measurement gap is an important network optimization function in the wireless communication system. A terminal device (User Equipment, UE) may perform signal quality measurement in the measurement gap, to support operations such as network performance monitoring, cell reselection, and handover. However, currently, when extended reality (Extended Reality, XR) service data is transmitted in the wireless communication system, if the transmission is during the measurement gap, the transmission conflicts with measurement, causing the transmission to be performed until after the measurement gap ends. This results in a problem that the measurement gap greatly affects the transmission of the service data.

Therefore, how to configure a measurement gap to mitigate impact on transmission of service data is a problem that needs to be urgently resolved.

### SUMMARY

Embodiments of this application provide a measurement time configuration method and apparatus, a chip, and a storage medium, applied to the field of communication technologies, so that a measurement time can be configured to mitigate impact on transmission of service data. According to a first aspect, an embodiment of this application provides a measurement time configuration method. The method includes:
receiving first indication information from a terminal device, where the first indication information indicates conflict information of a first measurement time, and the conflict information indicates that the first measurement time overlaps transmission.

Optionally, the transmission is uplink transmission or downlink transmission; and when the transmission is the downlink transmission, the transmission includes a discontinuous reception DRX active time.

Optionally, the first indication information includes at least one of the following: a conflict indication, a quantity of first measurement times, the first measurement time, a maximum quantity of conflicts, and a period to which the first measurement time belongs.

Optionally, the first indication information further includes at least one of the following: a transmission period, jitter information, and BAT information.

Optionally, the first indication information includes a bitmap, and one bit in the bitmap corresponds to one measurement time in the transmission period; and
when a value of the bit is a first value, it indicates that the measurement time corresponding to the bit does not conflict with the transmission; or
when a value of the bit is a second value, it indicates that the measurement time corresponding to the bit conflicts with the transmission.

Optionally, the method further includes:
sending third indication information to the terminal device, where the third indication information indicates the first reporting manner.

Optionally, the method further includes:
sending second indication information to the terminal device, where the second indication information indicates the first quantity threshold, the first preset duration, the preset quantity, and/or the preset quantity of measurement periods.

Optionally, receiving the first indication information from the terminal device includes:
receiving the first indication information reported by the terminal device in the first reporting manner.

Optionally, the first reporting manner includes a first sub-reporting manner, the first sub-reporting manner indicates a range of the conflict information, and the range of the conflict information includes conflict information within the first preset duration;
a range of the conflict information includes conflict information in one measurement period;
a range of the conflict information includes conflict information in a preset quantity of measurement periods, and the preset quantity is greater than or equal to 2; or
a range of the conflict information includes conflict information in a first measurement period within second preset duration, and the first measurement period is a measurement period in which a quantity of conflicts is greater than or equal to a first conflict threshold or a measurement period in which a quantity of conflicts is less than or equal to a second conflict threshold.

Optionally, the first reporting manner includes a second sub-reporting manner, the second sub-reporting manner indicates a trigger condition for the terminal device to report the conflict information, and the trigger condition includes at least one of the following:
a quantity of conflicts is greater than or equal to the first quantity threshold;
there is a conflicting measurement time in a measurement period;
duration reaches the first preset duration; or
the conflict information is different from conflict information indicated by previous first indication information.

Optionally, the second indication information includes a timer, and duration of the timer is the same as the first preset duration.

Optionally, the third indication information includes an identifier of the first reporting manner.

Optionally, the method further includes:
sending fourth indication information to the terminal device, where the fourth indication information includes a candidate reporting manner list, and the candidate reporting manner list includes the first reporting manner.

Optionally, the method further includes:
sending fifth indication information to the terminal device, where the fifth indication information indicates the terminal device to report conflict information related to a first logical channel group.

Optionally, the method further includes:
adjusting a configuration of the first measurement time based on the first indication information.

Optionally, before receiving the first indication information from the terminal device, the method further includes:
sending sixth indication information to the terminal device, where the sixth indication information indicates configuration information of at least two measurement times in the measurement period.

According to a second aspect, an embodiment of this application provides a measurement time configuration method. The method includes:
sending first indication information to a network device, where the first indication information indicates conflict information of a first measurement time, and the conflict information indicates that the first measurement time overlaps transmission.

Optionally, the transmission is uplink transmission or downlink transmission; and when the transmission is the downlink transmission, the transmission includes a discontinuous reception DRX active time.

Optionally, the first indication information includes at least one of the following: a conflict indication, a quantity of first measurement times, the first measurement time, a maximum quantity of conflicts, and a period to which the first measurement time belongs.

Optionally, the first indication information further includes at least one of the following: a transmission period, jitter information, and burst arrival time information.

Optionally, the first indication information includes a bitmap, and one bit in the bitmap corresponds to one measurement time in the transmission period; and
when a value of the bit is a first value, it indicates that the measurement time corresponding to the bit does not conflict with the transmission; or
when a value of the bit is a second value, it indicates that the measurement time corresponding to the bit conflicts with the transmission.

Optionally, the method further includes:
receiving third indication information from the network device, where the third indication information indicates the first reporting manner.

Optionally, the method further includes:
receiving second indication information from the network device, where the second indication information indicates the first quantity threshold, the first preset duration, the preset quantity, and/or the preset quantity of measurement periods.

Optionally, sending the first indication information to the network device includes:
sending the first indication information to the network device in the first reporting manner.

Optionally, the first reporting manner includes a first sub-reporting manner, the first sub-reporting manner indicates a range of the conflict information, and the range of the conflict information includes conflict information within the first preset duration;
a range of the conflict information includes conflict information in one measurement period;
a range of the conflict information includes conflict information in a preset quantity of measurement periods, and the preset quantity is greater than or equal to 2; or
a range of the conflict information includes conflict information in a first measurement period within second preset duration, and the first measurement period is a measurement period in which a quantity of conflicts is greater than or equal to a first conflict threshold or a measurement period in which a quantity of conflicts is less than or equal to a second conflict threshold.

Optionally, the first reporting manner includes a second sub-reporting manner, the second sub-reporting manner indicates a trigger condition for the terminal device to report the conflict information, and the trigger condition includes at least one of the following:
a quantity of conflicts is greater than or equal to the first quantity threshold;
there is a conflicting measurement time in a measurement period;
duration reaches the first preset duration;
the preset quantity of measurement periods has elapsed; or
the conflict information is different from conflict information indicated by previous first indication information.

Optionally, the second indication information includes a timer, and duration of the timer is the same as the first preset duration.

Optionally, the second indication information includes an identifier of the first reporting manner.

Optionally, the method further includes:
receiving fourth indication information from the network device, where the fourth indication information includes a candidate reporting manner list, and the candidate reporting manner list includes the first reporting manner.

Optionally, the method further includes:
receiving fifth indication information from the network device, where the fifth indication information indicates the terminal device to report conflict information related to a first logical channel group.

Optionally, before sending the first indication information to the network device, the method further includes:
receiving sixth indication information sent by the network device, where the sixth indication information indicates configuration information of at least two measurement times in the measurement period; and
performing signal measurement based on the sixth indication information.

According to a third aspect, an embodiment of this application provides a measurement time configuration apparatus. The apparatus includes:
a receiving module, configured to receive first indication information from a terminal device, where the first indication information indicates conflict information of a first measurement time, and the conflict information indicates that the first measurement time overlaps transmission.

According to a fourth aspect, an embodiment of this application provides a measurement time configuration apparatus. The apparatus includes:
a sending module, configured to send first indication information to a network device, where the first indication information indicates conflict information of a first measurement time, and the conflict information indicates that the first measurement time overlaps transmission. According to a fifth aspect, an embodiment of this application provides a measurement time configuration apparatus. The apparatus includes: a processor, a transceiver, and a memory. The processor is separately communicatively connected to the transceiver and the memory.

The memory stores computer-executable instructions.

The transceiver performs communication interaction with an external device.

The processor executes the computer-executable instructions stored in the memory, to implement the method according to any one of the first aspect or any one of the second aspect.

According to a sixth aspect, an embodiment of this application provides a chip. The chip stores a computer program; and when the computer program is executed by the chip, the method according to any one of the first aspect or any one of the second aspect is implemented.

According to a seventh aspect, an embodiment of this application provides a computer-readable storage medium. The computer-readable storage medium stores a computer program; and when the computer program is executed by a processor, the method according to any one of the first aspect or any one of the second aspect is implemented.

According to an eighth aspect, an embodiment of this application provides a computer program product. The computer program product includes a computer program; and when the computer program is run, a computer is enabled to perform the method according to any one of the first aspect or any one of the second aspect.

According to the measurement time configuration method and apparatus, the chip, and the storage medium provided in the application, the terminal device reports, to the network device by monitoring or predicting whether the transmission overlaps the measurement time, the first indication information indicating the information about the conflict between the transmission and the measurement time. The network device adjusts, based on the conflict information indicated by the first indication information, the configuration of the first measurement time that overlaps the transmission, so that a quantity of first measurement times that overlap the transmission decreases and/or an overlapping area decreases during subsequent transmission, thereby mitigating impact of the measurement time on the transmission, improving transmission efficiency, and improving user experience.

### BRIEF DESCRIPTION OF DRAWINGS

FIG. 1 is a communication system to which embodiments of this application are applied;
FIG. 2 is a diagram of a service data transmission scenario according to an embodiment of this application;
FIG. 3 is a diagram of another service data transmission scenario according to an embodiment of this application;
FIG. 4 is a schematic flowchart of a measurement time configuration method according to an embodiment of this application;
FIG. 5 is a diagram of a transmission conflict according to an embodiment of this application;
FIG. 6 is a diagram of another transmission conflict according to an embodiment of this application;
FIG. 7 is a schematic flowchart of another measurement time configuration method according to an embodiment of this application;
FIG. 8 is a diagram of a structure of a measurement time configuration apparatus according to an embodiment of this application;
FIG. 9 is a diagram of a structure of another measurement time configuration apparatus according to an embodiment of this application; and
FIG. 10 is a diagram of a structure of still another measurement time configuration apparatus according to an embodiment of this application.

### DESCRIPTION OF EMBODIMENTS

To clearly describe technical solutions in embodiments of this application, in the embodiments of this application, the term such as "example" or "for example", is used to represent giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a relative concept in a specific manner.

In the embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be noted that in the embodiments of this application, "when ... " may be an instantaneous occurrence time of a case, or may be a period of time after occurrence of a case, which is not specifically limited in the embodiments of this application. In addition, a display interface provided in the embodiments of this application is merely used as an example, and the display interface may further include more or less content.

The technical solutions of the embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communication system, a 5th generation (5th generation, 5G) system, a new radio (new radio, NR) system, or a new system that may occur in the future.

For ease of understanding of the embodiments of this application, a communication system to which the embodiments of this application are applied is first described in detail.

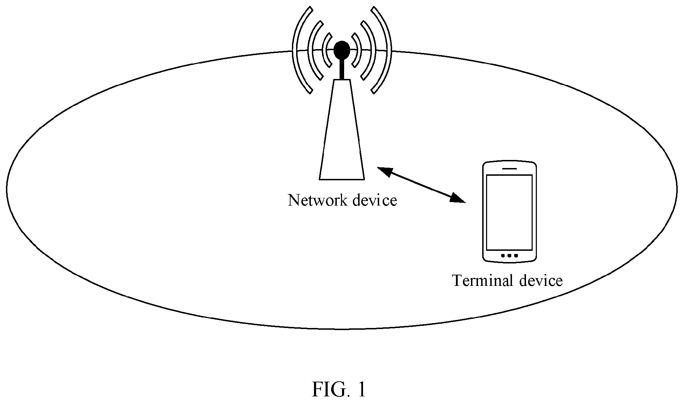

FIG. 1 shows a communication system to which embodiments of this application are applied. As shown in FIG. 1, the communication system includes: a network device and a terminal device.

The network device may communicate with the terminal device through a wireless link. When the network device is used as a communication transmit end, the terminal device may be used as a communication receive end. When the network device is used as a communication receive end, the terminal device may be used as a communication transmit end. A quantity of network devices and a quantity of terminal devices included in the communication system are not limited in the embodiments of this application. In addition, it should be understood that FIG. 1 is merely a diagram, and the communication system may further include another network device. This is not limited in this application, and is not shown in FIG. 1.

In the embodiments of this application, the terminal device may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device having a wireless connection function. Currently, some examples of the terminal device include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in a future evolved public land mobile communication network (public land mobile network, PLMN), or the like. This is not limited in this application.

By way of an example but not a limitation, in this application, the terminal device may be a terminal device in an internet of things (internet of things, IoT) system. The internet of things is an important part in future development of information technology, and is mainly technically characterized in that things are connected to networks through communication technologies, to implement intelligent networks of human-machine interconnection and interconnection between things. For example, the terminal device in the embodiments of this application may be a wearable device. The wearable device may also be referred to as a wearable smart device, and is a general term for wearable devices that are intelligently designed and developed for daily wear by using a wearable technology, for example, glasses, gloves, a watch, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable smart devices include full-featured and large-sized devices that can implement all or a part of functions without depending on smartphones, for example, smart watches or smart glasses, and include devices that focus on only one type of application function and need to be used together with other devices such as smartphones, for example, various smart bands or smart jewelry for monitoring physical signs.

As an example rather than a limitation, in the embodiments of this application, the terminal device may alternatively be a terminal device in machine type communication (machine type communication, MTC). In addition, the terminal device may alternatively be a vehicle-mounted module, a vehicle-mounted assembly, a vehicle-mounted component, a vehicle-mounted chip, a vehicle-mounted unit, or the like that is built in a vehicle as one or more components or units. The vehicle can use the vehicle-mounted module, the vehicle-mounted assembly, the vehicle-mounted component, the vehicle-mounted chip, the vehicle-mounted unit, or the like that is built in the vehicle to implement a method provided in this application. Therefore, the embodiments of this application may also be applied to an internet of vehicles, for example, a vehicle to everything (vehicle to everything, V2X), long term evolution-vehicle (long term evolution-vehicle, LTE-V), or a vehicle-to-vehicle (vehicle-to-vehicle, V2V) technology.

The network device involved in this application may be a device communicating with the terminal device. The network device may also be referred to as an access network device or a radio access network device. The network device may be a transmission reception point (transmission reception point, TRP), or may be an evolved NodeB (evolved NodeB, eNB or eNodeB) in an LTE system, or may be a home NodeB (for example, home evolved NodeB, or home NodeB, HNB) or a base band unit (base band unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, or may be an access point (access point, AP) in a WLAN, or may be a gNB in an NR system. Alternatively, the network device may be a metro base station, a micro base station, a pico base station, a femto base station, or the like. This is not limited in this application.

In a network structure, the network device may include a central unit (centralized unit, CU) node, a distributed unit (distributed unit, DU) node, a RAN device including a CU node and a DU node, or a RAN device including a control plane CU node (CU-CP node), a user plane CU node (CU-UP node), and a DU node.

The network device provides a service for a cell. The terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells are featured by small coverage and low transmit power, and are applicable to providing a high-rate data transmission service.

Currently, the network device may configure, for the terminal device, a measurement gap (measurement gap, MG) used for measurement. The measurement may include, for example, inter-frequency measurement or radio access technology (radio access technology, RAT) measurement. In the measurement gap, the terminal device stops data transmission, and the network device does not perform uplink and downlink scheduling. As a result, performing network measurement by using the measurement gap affects transmission of other service data.

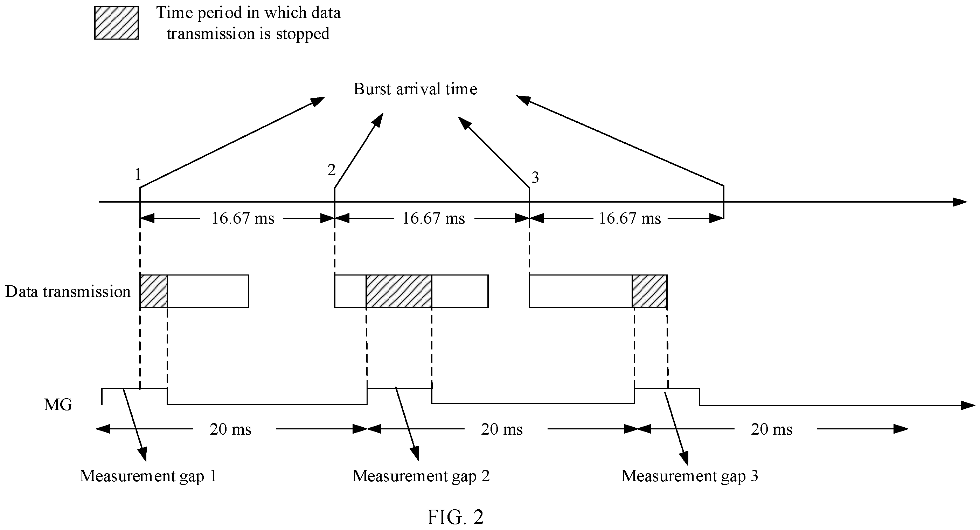

For example, FIG. 2 is a diagram of a service data transmission scenario according to an embodiment of this application. As shown in FIG. 2, the service data is XR service data, and a discontinuous reception (discontinuous reception, DRX) cycle of the service data is 16.67 ms, and a burst arrival time (Burst Arrivals) of the XR service data may be understood as a moment at which a preconfigured terminal device sends the XR service data to a network device. A period of the measurement gap used by the terminal device to perform network measurement is 20 ms. In FIG. 2, each bulge part is one measurement gap, and a length of each bulge part is a length of the measurement gap.

If a burst arrival time 1 of the XR service data overlaps a measurement gap 1, that is, the burst arrival time 1 is within duration of the measurement gap 1. Therefore, the terminal device stops transmitting the XR service data within the duration of the measurement gap 1, and starts to transmit the XR service data after the measurement gap 1 ends.

If a burst arrival time 2 of the XR service data is before a measurement gap 2, the terminal device starts to transmit the XR service data at the burst arrival time 2, and stops transmitting the XR service data at the start of the measurement gap 2; and after the measurement gap 2 ends, continues to transmit remaining XR service data. By analogy, when starting to transmit the XR service data at a burst arrival time 3, the terminal device also needs to suspend transmission of the XR service data within duration of a measurement gap 3.

It may be learned that when the terminal device performs network measurement by using the measurement gap, transmission of other service data is affected within duration of the measurement gap. However, if data transmission can be performed in the measurement gap, accuracy of network measurement may be affected. Consequently, a behavior such as cell handover of the terminal device is affected, and quality of a network environment in which the terminal device is located is reduced. Therefore, a method urgently needs to be provided currently, so that impact of a measurement gap on service data transmission can be mitigated when normal measurement performed by the terminal device is maintained, thereby improving user experience.

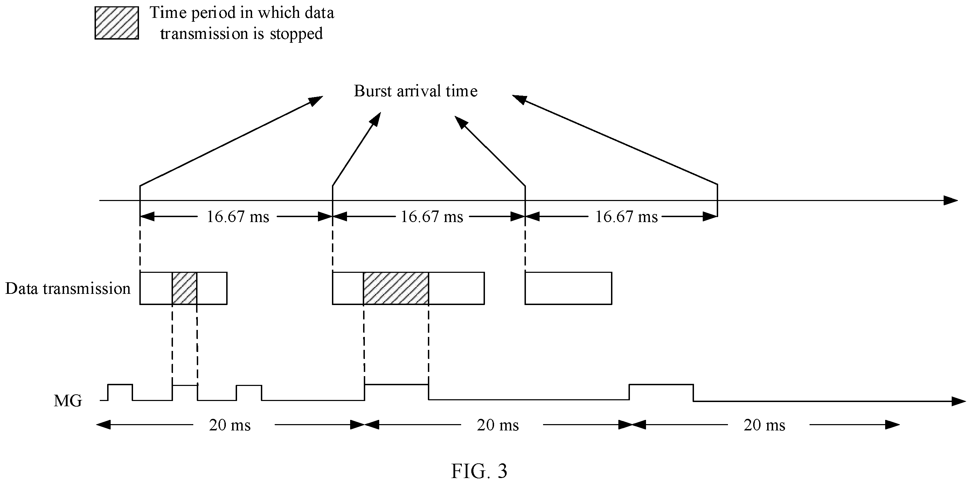

Currently, to mitigate impact of the measurement gap on transmission of the service data, impact of a measurement time on transmission of the service data may also be mitigated by configuring a plurality of measurement periods of measurement times with a short length and an interval in the measurement period. The measurement time includes a measurement gap or an SSB measurement time (SS/PBCH block measurement timing configuration, SMTC). This application is described by using an example in which the measurement time includes the measurement gap. For example, FIG. 3 is a diagram of another service data transmission scenario according to an embodiment of this application. As shown in FIG. 3, there is at least one measurement period configured with a plurality of measurement times (three measurement times are used as an example in FIG. 3) that are short in length and have intervals between them, so that the length of the measurement time that conflicts with the transmission is small, and an overlapping area between the transmission and the measurement time is reduced, thereby reducing transmission suspension duration, and mitigating impact of the measurement time on service data transmission.

However, although the method can mitigate the impact of the measurement time on the service data transmission to some extent, there may still be some impact of the measurement time on the service data transmission.

In view of this, this application provides a measurement time configuration method. A network device determines, based on first indication information reported by a terminal device, conflict information indicating that transmission overlaps a measurement time, and adjusts a configuration of a subsequent measurement time based on the conflict information, so that an overlapping area between the subsequent measurement time and the transmission is reduced, thereby reducing a conflict between the measurement time and the transmission, mitigating impact of the measurement time on the transmission, and improving user experience.

The measurement time configuration method provided in this application may be used for the configuration of the measurement gap in the foregoing scenario in FIG. 2, or may be used for the configuration of the measurement time in the foregoing scenario in FIG. 3.

The following describes in detail the measurement time configuration method in this application with reference to the accompanying drawings. The embodiments shown in this application are executed by a terminal device or a network device. A specific form and quantity of the shown devices are merely examples, and should not be construed as any limitation to implementation of the method provided in this application.

The terminal device in embodiments of this application may be the terminal device, or may be a chip, a chip system, or a processor that supports the terminal device in implementing the data transmission method, or may be a logic module or software that can implement all or some functions of the terminal device. The network device in the embodiments of this application may be the network device, or may be a chip, a chip system, or a processor that supports the network device in implementing the data transmission method, or may be a logic module or software that can implement all or some functions of the network device. This is not specifically limited in this application.

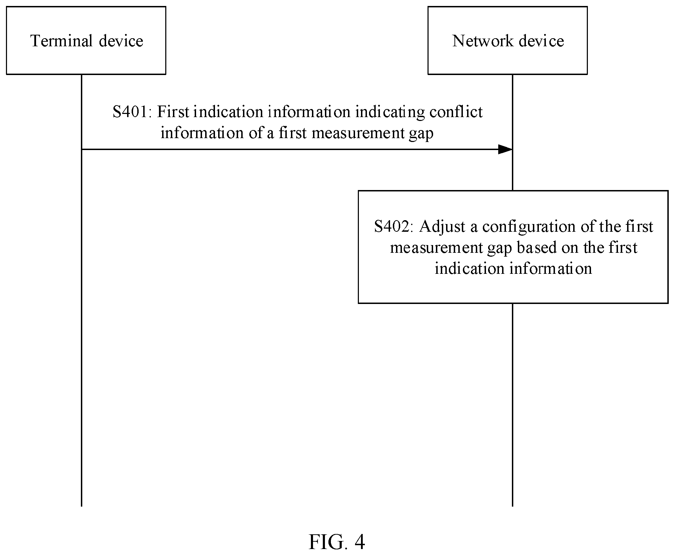

FIG. 4 is a schematic flowchart of a measurement time configuration method according to an embodiment of this application. As shown in FIG. 4, the method may include the following steps.

S401: A terminal device sends first indication information to a network device.

Correspondingly, the network device receives the first indication information from the terminal device.

The first indication information indicates conflict information of a first measurement time, and the conflict information indicates related information that the first measurement time overlaps transmission, that is, the conflict information indicates related information that a transmission time overlaps the first measurement time. The transmission may mean transmitting data on a first resource.

The first indication information may indicate only the first measurement time that conflicts with the transmission time, or may indicate a second measurement time that includes the first measurement time. When the second measurement time that includes the first measurement time is indicated, the second measurement time may include at least one first measurement time and at least one non-conflicting measurement time.

In an implementation, the conflict information may be determined by the terminal device based on historical data of the transmission and the measurement time, or may be determined by prediction of transmission that has not yet occurred and prediction of a measurement time that has not yet arrived by the terminal device.

When the conflict information is determined based on the historical data, the terminal device may determine, based on whether completed transmission overlaps a measurement time that has elapsed or has been measured, or whether the completed transmission is suspended due to being interrupted by the measurement time that has elapsed (for example, a time difference may be determined based on a start time and an end time of the transmission, and is compared with a predicted time in which the transmission is not interrupted by the measurement time; and if a difference between the two is greater than a preset threshold, it is considered that the transmission is interrupted by the measurement time; or when the transmission overlaps the measurement time, and no data transmission is performed, it may be considered that the transmission is interrupted by a measurement gap), or whether a discontinuous reception active time of the completed transmission overlaps the measurement time that has elapsed (for example, if the discontinuous reception active time overlaps the measurement time in time domain, it may be considered that the discontinuous reception active time overlaps the measurement time), whether the transmission time conflicts with the measurement time. If there is the conflict, the conflicting measurement time is the first measurement time. The first indication information may indicate conflict information in one measurement period, may indicate conflict information in a plurality of measurement periods, may indicate conflict information within specific duration, or the like. This is not limited in this application.

For example, continuing to refer to FIG. 3, if a 2^{nd} measurement time in a 1^{st} measurement period is a measurement time that has elapsed, and the transmission overlaps the measurement time, the 2^{nd} measurement time in the 1^{st} measurement period is the first measurement time, and the transmission conflicts with the measurement time.

When the conflict information is determined based on a prediction result, the terminal device may determine, based on whether transmission that has not occurred may overlap a measurement time that has not arrived, or whether transmission that has not occurred may be suspended due to being interrupted by a measurement time that has not arrived, or whether a discontinuous reception active time of transmission that has not occurred overlaps a measurement time that has not arrived, whether there is a conflict between the transmission and the measurement time in the future. If there is the conflict, the conflicting measurement time is the first measurement time.

Optionally, the transmission may be uplink transmission or downlink transmission. When a type of the transmitted service data is an uplink transmission service, if the transmission overlaps the measurement time, or the transmission is suspended due to being interrupted by the measurement time, the transmission overlaps the measurement time, in other words, the transmission conflicts with the measurement time. When a type of the transmitted service data is a downlink transmission service, if the transmission overlaps the measurement time, or the transmission is suspended due to being interrupted by the measurement time, or the discontinuous reception active time of the terminal device overlaps the measurement time, the transmission conflicts with the measurement time.

The first indication information may indicate the conflict information of the first measurement time. For example, the first indication information may indicate only whether a sending conflict occurs at the first measurement time; or the first indication information may indicate one or more of the following information: a quantity of first measurement times, the first measurement time, a maximum quantity of conflicts in the measurement period, or the like; or the first indication information may indicate whether a sending conflict occurs at the first measurement time, and indicate one or more of the following information: a quantity of first measurement times, the first measurement time, a maximum quantity of conflicts in the measurement period, or the like.

When the first indication information indicates the first measurement time, the first indication information may be an identifier indicating the first measurement time, or may indicate a location of the first measurement time, to determine a specific measurement time or specific measurement times included in the first measurement time. For example, each measurement time in different measurement periods has a unique identifier, or a plurality of measurement times (a measurement time 1 in FIG. 3) in one measurement period each have a unique identifier. The identifier may be a name, a number, or the like of the measurement time, for example, may be a 1^{st} measurement time, a 2^{nd} measurement time, or the like in the measurement period. The identifier of the first measurement time can be used to determine which measurement times are the first measurement time. For another example, the location of the first measurement time may be determined based on a number of a subframe included in the first measurement time, to determine which measurement times are the first measurement time. When there are a plurality of measurement times in one measurement period, the first indication information may also indicate the measurement period to which the first measurement time belongs, then further indicate, in the measurement period, which measurement times in the plurality of measurement times are the first measurement time, and so on.

In a possible implementation, the first indication information is indication information indicating the conflict information. For example, the network device prestores a conflict information list, and the first indication information indicates the conflict information from the conflict information list. The network device may determine the conflict information from the conflict information list based on an indication of the first indication information. The conflict information list may be generated based on conflict information historically reported by the terminal device.

In another possible implementation, the first indication information includes content in the conflict information. The network device may directly extract the conflict information from the first indication information.

S402: The network device adjusts a configuration of the first measurement time based on the first indication information.

The configuration of the first measurement time is used to determine a location, a length, or the like of the first measurement time. The network device may adjust the configuration of the first measurement time based on the first indication information, to change the location of the first measurement time, the length of the first measurement time, and/or a quantity of measurement times in the measurement period, so that a quantity of measurement times that conflict with the transmission is reduced, and the location of the first measurement time is changed to a location at which there is no conflict with the transmission.

If the conflicting first measurement time is a measurement time that has elapsed or has been measured, a measurement time mode corresponding to the measurement time may be adjusted, to adjust configurations of subsequent measurement times that have a same measurement time mode as the first measurement time, thereby reducing occurrence of conflicts for these subsequent measurement times.

If the conflicting first measurement time is a measurement time that has not arrived, a measurement time mode corresponding to the measurement time may be adjusted, to adjust the configuration of the first measurement time before the transmission starts, thereby reducing in advance occurrence of conflicts with the first measurement time during subsequent transmission. After adjusting the configuration of the first measurement time based on the first indication information, the network device may send the adjusted configuration of the first measurement time to the terminal device, so that the terminal device adjusts the location of the first measurement time, the length of the first measurement time, and/or the quantity of measurement times in the measurement period based on the adjusted configuration of the first measurement time.

In a possible implementation, the network device may adjust the configuration of the first measurement time, so that the location and/or the length of the first measurement time are/is changed. After receiving a next piece of first indication information, the network device re-determines, based on a change between conflict information indicated in the next piece of first indication information and the conflict information indicated by the first indication information, whether the configuration of the first measurement time needs to continue to be adjusted. The network device cyclically performs the foregoing process to iteratively reduce occurrence of the conflict between the transmission and the measurement time, until content that is included in the conflict information indicated by the first indication information received by the network device is less than a corresponding preset conflict threshold, for example, until the conflict information indicated by the first indication information received by the network device indicates that there is no first measurement time, or the quantity of first measurement times included in the conflict information is less than a preset conflict quantity threshold, or the maximum quantity of conflicts in the measurement period is less than a preset maximum quantity threshold.

In another possible implementation, the network device may adjust, based on information about the transmission that conflicts with the first measurement time and a first measurement period indicated by the first indication information, a configuration of the first measurement period to a configuration that does not conflict with the transmission, for example, may adjust the configuration of the first measurement period, so that a location of the first measurement period does not overlap a location of the transmission, the overlap between the location of the first measurement period and the location of the transmission becomes smaller, or the like. The information about the transmission may include the location, the transmission period, or the like of the transmission.

According to the method provided in this embodiment of this application, the terminal device reports, to the network device by monitoring or predicting whether the transmission overlaps the measurement time, the first indication information indicating the information about the conflict between the transmission and the measurement time. The network device adjusts, based on the conflict information indicated by the first indication information, the configuration of the first measurement time that overlaps the transmission, so that a quantity of first measurement times that overlap the transmission decreases and/or an overlapping area decreases during subsequent transmission, thereby mitigating impact of the measurement time on the transmission, improving transmission efficiency, and improving user experience.

Optionally, before the terminal device sends the first indication information to the network device, the network device may further send, to the terminal device, sixth indication information indicating configuration information of at least two measurement times in the measurement period. For example, the configuration of the measurement time is shown in FIG. 3. The terminal device performs measurement based on the sixth indication information; and when the conflict between the measurement time and the transmission occurs, the terminal sends the first indication information. After receiving the first indication information sent by the terminal device, the network device adjusts the configuration information of the at least two measurement times based on the first indication information, and sends the adjusted configuration information to the terminal device, so that the terminal device adjusts configurations of the at least two measurement times.

The following describes the first indication information in detail by using an example in which the first indication information includes the content in the conflict information. The first indication information may include at least one of the following: the quantity of first measurement times, the first measurement time, and the maximum quantity of conflicts in the conflict information.

The quantity of first measurement times is a quantity of measurement times that conflict with the transmission. Optionally, the first indication information indicates a quantity of measurement times that conflict with the transmission within specific duration. In a manner, in a case that a range of the conflict information indicated by the first indication information includes only one measurement period, the quantity of first measurement times is a quantity of measurement times that overlap the transmission in the measurement period. In another manner, in a case that a range of the conflict information indicated by the first indication information includes a plurality of measurement periods, in one case, the quantity of the first measurement times is a quantity of measurement times that overlap the transmission in the plurality of measurement periods; or in another case, the quantity of first measurement gaps is a quantity, of measurement times that overlap the transmission, corresponding to each of the plurality of measurement periods, so that the quantity of first measurement gaps may include one or more values. In another manner, the quantity of the first measurement times is a quantity of measurement times that overlap the transmission in a period of time. In the foregoing, whether to report indication information for collecting statistics in one period or a plurality of periods may be configured by a network side. For example, the network side configures auxiliary information for collecting statistics of overlap between the transmission and the measurement time in three periods.

The first measurement time is a measurement time that conflicts with the transmission, and may be represented, for example, by using the identifier of the first measurement time. For example, each measurement time has an identifier such as a name or a number corresponding to the measurement time, and then the first indication information includes the identifier of the first measurement time that conflicts with transmission. Alternatively, the first measurement time may be determined based on the location of the first measurement time. For example, the first indication information includes subframes occupied by the first measurement time that conflicts with the transmission, system frame numbers of system frames to which these subframes belong, and the like. Alternatively, if the first measurement time is a measurement time that overlaps with the transmission in the measurement period, for example, it may indicate which measurement time in the measurement period is the first measurement time. Alternatively, if the first measurement time is a measurement time that overlaps with the transmission in the plurality of measurement periods, for example, it may indicate which measurement time in each measurement period is the first measurement time (where the range of the conflict information including two measurement periods and each measurement period including three measurement times are used as an example, for example, it may be indicated that a 3^{rd} measurement time in a measurement period 1, a 1^{st} measurement time in a measurement period 2, and a 2^{nd} measurement time in a measurement period 2 are the first measurement time).

The maximum quantity of conflicts in the conflict information may be a total quantity of first measurement times in the conflict information, or the maximum quantity of conflicts in the conflict information is a total quantity of first measurement times corresponding to a measurement period with a largest quantity of conflicts in the reported measurement periods.

Optionally, in a case that the range of the conflict information indicated by the first indication information includes the plurality of measurement periods, to further determine each first measurement time, the first indication information may further include a measurement period to which each first measurement time belongs (for example, include an identifier of the measurement period), so that the network device can quickly determine the first measurement time in the measurement period based on the measurement period to which each first measurement time belongs.

Optionally, in step S402, the network device may further need to determine, based on the information about the transmission that conflicts with the first measurement time, how to adjust the configuration of the first measurement time. Therefore, the first indication information may further include at least one of a service period, jitter information, and burst arrival time (burstArrivalTime, BAT) information, to determine information about a transmission service that conflicts with the first measurement time. The transmission period may indicate the location of the transmission, so that the network device adjusts, based on the location of the transmission, the location of the first measurement time to avoid the location of the transmission. The jitter information may indicate a jitter deviation of the transmission, so that when the network device adjusts the location of the first measurement time based on the location of the transmission, the jitter deviation of the transmission can be reserved, and a case in which the transmission overlaps the measurement time due to the jitter deviation. The BAT information is used to determine an arrival time of a 1^{st} data packet of the service (for example, a data burst), and it may be determined, based on the BAT information, whether transmission of the service is in the measurement time period, to determine whether transmission of the service conflicts with the measurement time.

In addition, optionally, the first indication information may indicate, by using a bitmap, whether the measurement time conflicts with the transmission. In this implementation, the first indication information may further include a bitmap, one bit in the bitmap corresponds to one measurement time, and the bit can represent whether the measurement time conflicts with the transmission. For example, when a bit value is a first value, it indicates that a measurement time corresponding to the bit does not conflict with the transmission; or when a bit value is a second value, it indicates that a measurement time corresponding to the bit conflicts with the transmission, and the measurement time corresponding to the bit is the foregoing first measurement time. For example, the first value may be 0, and the second value may be 1.

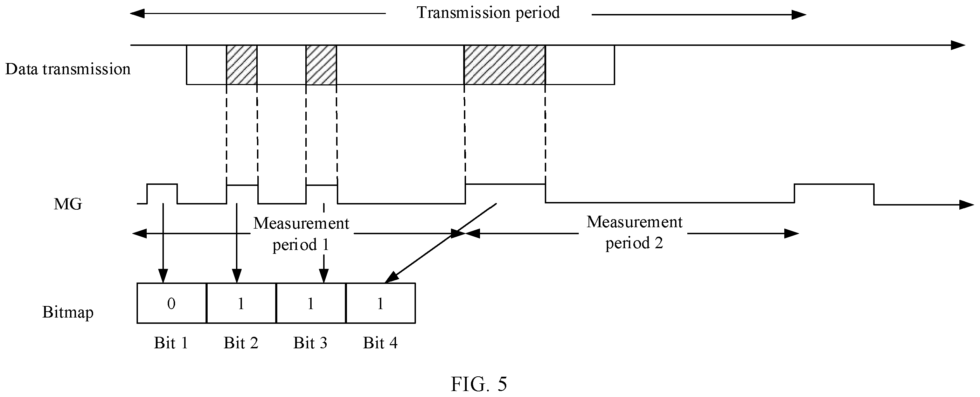

In a possible implementation, one bit in the bitmap corresponds to one measurement time in the transmission period. FIG. 5 is a diagram of a transmission conflict according to an embodiment of this application. As shown in FIG. 5, the length of the transmission period is the same as a sum of a length of the measurement period 1 and a length of the measurement period 2. In the transmission period, the data transmission is shown in the figure, and the transmission overlaps a 2^{nd} measurement time in the measurement period 1, a 3^{rd} measurement time in the measurement period 1, and a measurement time in the measurement period 2. That is, there are two measurement periods in the transmission period, and there are four measurement times in total. The bitmap includes four bits, and each bit corresponds to one measurement time in the transmission period. Therefore, in the bitmap, a value of a bit corresponding to a 1^{st} measurement time in the measurement period 1 is the first value 0, it indicates that the measurement time does not overlap the transmission (that is, there is no conflict); and values of bits corresponding to the 2^{nd} measurement time in the measurement period 1, the 3^{rd} measurement time in the measurement period 1, and the measurement time in the measurement period 2 are the second value 1, it indicates that the measurement time overlaps the transmission (that is, there is a conflict). That is, the first measurement time indicated by the first indication information includes the 2^{nd} measurement time in the measurement period 1, the 3^{rd} measurement time in the measurement period 1, and the measurement time in the measurement period 2.

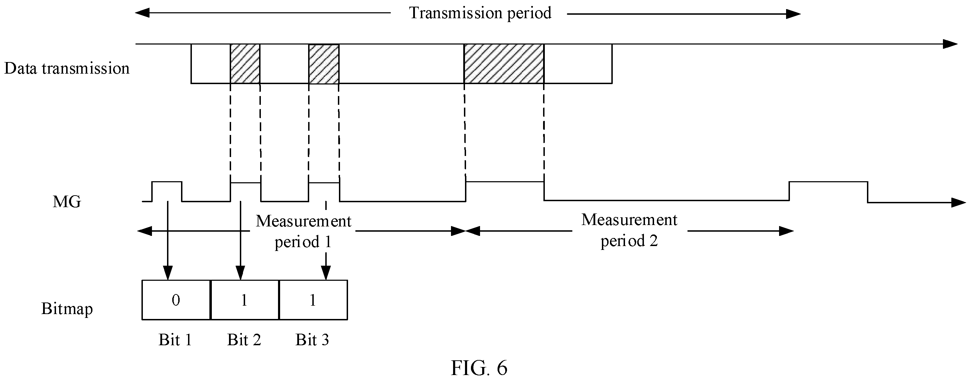

In another possible implementation, one bit in the bitmap corresponds to one measurement time in the measurement period. FIG. 6 is a diagram of another transmission conflict according to an embodiment of this application. As shown in FIG. 6, the length of the transmission period is the same as a sum of a length of the measurement period 1 and a length of the measurement period 2. The bitmap is a bitmap corresponding to the measurement period 1. Because there are three measurement times in the measurement period 1, the bitmap includes three bits, and each bit corresponds to one measurement time in the measurement period 1. In the measurement period 1, data transmission overlaps a 2^{nd} measurement time in the measurement period 1 and a 3^{rd} measurement time in the measurement period 1. Therefore, in the bitmap, a value of a bit corresponding to a 1^{st} measurement time in the measurement period 1 is the first value 0, it indicates that the measurement time does not overlap the transmission (that is, there is no conflict); and values of bits corresponding to the 2^{nd} measurement time in the measurement period 1 and the 3^{rd} measurement time in the measurement period 1 are the second value 1, it indicates that the measurement time overlaps the transmission (that is, there is a conflict).

According to the method provided in this embodiment of this application, the first indication information includes different conflict information, to provide a data basis for the network device to adjust the configuration of the first measurement time based on the first indication information, so that the network device can adjust, based on the conflict information indicated by the first indication information, the configuration of the first measurement time to a configuration that has less impact on the transmission, thereby mitigating impact of the measurement time on the transmission, and improving transmission efficiency.

The following describes in detail how the terminal device reports the first indication information. The terminal device may report the first indication information to the network device in a specific reporting manner. For example, the specific reporting manner is a first reporting manner including a first sub-reporting manner and/or a second sub-reporting manner. The first sub-reporting manner indicates the range of the conflict information indicated by the first indication information reported by the terminal device to the network device, and the second sub-reporting manner indicates a trigger condition for the terminal device to report the first indication information to the network device.

The range of the conflict information indicated by the first indication information reported by the terminal device to the network device is first described.

Optionally, the range of the conflict information indicated by the first indication information may be conflict information within first preset duration. Each time the first preset duration arrives, the terminal device indicates, to the network device by using the first indication information, the conflict information included within the first preset duration. The first preset duration may be preset in the terminal device, or may be determined by the terminal device, or may be obtained by the terminal device from another device in advance. When the first preset duration is obtained by the terminal device from the another device in advance, the another device may be, for example, a network device or another device connected to the terminal device. The another device being the network device is used as an example. The first preset duration may be obtained by the terminal device by using an indication received in advance from the network device. For example, the network device may send second indication information to the terminal device in advance, where the second indication information indicates the first preset duration; or the network device directly sends the first preset duration to the terminal device.

In this implementation, the first preset duration may be set by a timer, and the timer may be a timer preset in the terminal device, or may be a timer delivered by the network device to the terminal device. Duration of the timer is the same as the first preset duration. The timer being delivered by the network device to the terminal device is used as an example. The network device may send, to the terminal device, the second indication information carrying the timer, or send, to the terminal device, other information carrying the timer. Alternatively, the second indication information may indicate the terminal device to select a corresponding timer from a plurality of timers preset in the terminal device, or the second indication information may indicate the terminal device to set duration of the timer to second preset duration or the like. The timer may be any existing timer. This is not limited in this application. After receiving the configuration information, sent by the network device, for reporting the conflict information indicating that the transmission overlaps the measurement time, the terminal device may start the timer, and trigger reporting of the first indication information in a case that the timer expires.

Optionally, the range of the conflict information indicated by the first indication information may be conflict information in one measurement period. That is, each piece of first indication information reported by the terminal device to the network device includes only information about a conflict between a measurement time and transmission in one measurement period.

Optionally, the range of the conflict information indicated by the first indication information may be conflict information in a preset quantity of measurement periods, and the preset quantity is greater than or equal to 2. That is, each piece of first indication information reported by the terminal device to the network device includes information about a conflict between a measurement time and transmission in a preset quantity of measurement periods. For example, if the preset quantity is 3, the range of the conflict information includes information about a conflict between a measurement time and transmission in three measurement periods.

Optionally, the range of the conflict information indicated by the first indication information may be conflict information in a plurality of measurement periods. That is, each piece of first indication information reported by the terminal device to the network device includes information about a conflict between a measurement time and transmission in at least two measurement periods.

Optionally, the range of the conflict information indicated by the first indication information may be conflict information in one transmission period. That is, each piece of first indication information reported by the terminal device to the network device includes only information about a conflict between a measurement time and transmission included in one transmission period. The one transmission period may correspond to one or more measurement periods.

Optionally, the range of the conflict information indicated by the first indication information may further include conflict information of a first measurement period within the second preset duration, and the first measurement period may include one or more measurement periods. The first measurement period is a measurement period in which a quantity of conflicts is greater than or equal to a first conflict threshold or a measurement period in which a quantity of conflicts is less than or equal to a second conflict threshold. In this case, the range of the conflict information includes at least one measurement period, and there is a measurement time that conflicts with the transmission in the at least one measurement period. When the first measurement period is the measurement period in which the quantity of conflicts is greater than or equal to the first conflict threshold, the conflict information includes only conflict information of the measurement period in which the quantity of conflicts is greater than or equal to the first conflict threshold. When the first measurement period is the measurement period in which the quantity of conflicts is less than or equal to the second conflict threshold, the conflict information includes only conflict information of the measurement period in which the quantity of conflicts is less than or equal to the second conflict threshold. In this implementation, the first measurement period may alternatively be a measurement period with a maximum quantity of conflicts, or a measurement period with a minimum quantity of conflicts.

The trigger condition for the terminal device to report the first indication information to the network device is then described.

Each time the trigger condition is met, the terminal device reports the first indication information to the network device once.

Optionally, the trigger condition may be that a quantity of conflicts is greater than or equal to a first quantity threshold (where the quantity of conflicts may be one or more periods or a period of time). For example, if the first quantity threshold is 3, when the quantity of conflicts between the transmission and the transmission time of the terminal device reaches 3, the terminal device reports the first indication information to the network device. The first quantity threshold may be preset in the terminal device, or may be determined by the terminal device, or may be obtained by the terminal device from another device in advance. When the first quantity threshold is obtained by the terminal device from the another device in advance, the another device may be, for example, a network device or another device connected to the terminal device. The another device being the network device is used as an example. The first quantity threshold may be obtained by the terminal device by using an indication received in advance from the network device. For example, the network device may send second indication information to the terminal device in advance, where the second indication information indicates the first quantity threshold; or the network device directly sends the first quantity threshold to the terminal device.

Optionally, the trigger condition may be that there is a conflicting measurement time in the measurement period, or that at least one measurement time conflicts. That is, for each measurement period, if there is no conflicting measurement time in the measurement period, the terminal device does not report the first indication information; or if there is at least one measurement time that conflicts with the transmission in the measurement period, the terminal device reports the first indication information corresponding to the conflict information in the measurement period. In this implementation, the trigger condition may alternatively be that there are a preset quantity of conflicting measurement times in the measurement period. If a quantity of measurement times that conflicts with the transmission in one measurement period is greater than or equal to the preset quantity, the terminal device reports the first indication information corresponding to conflict information in the measurement period.

Optionally, the trigger condition may be that the duration reaches first preset duration, and the first preset duration is the same as the first preset duration in the range of the conflict information. That is, the terminal device periodically reports the first indication information to the network device based on the first preset duration. The terminal device may alternatively implement this implementation by using the foregoing timer (for example, when the timer whose duration is equal to the first preset duration expires, report the first indication information to the network device). Details are not described herein again.

Optionally, the trigger condition may be that the conflict information is different from conflict information indicated by previous first indication information. For example, the quantity of first measurement times in the conflict information is different from a quantity of first measurement times in the conflict information indicated by the previous first indication information; at least one first measurement time in the conflict information is different from a first measurement time in the conflict information indicated by the previous first indication information; the maximum quantity of conflicts in the conflict information is different from a maximum quantity of conflicts indicated by the previous first indication information; and/or the like. When the conflict information is different from the conflict information indicated by the previous first indication information, it indicates that the conflict between the transmission and the measurement time is changed, and the network device may need to further adjust the configuration of the first measurement time based on the change.

Optionally, the first indication information may alternatively be triggered to be reported together with a measurement report reported by the terminal device to the network device. For example, when reporting the measurement report to the network device, the terminal device also reports the first indication information to the network device. In this case, the first indication information may be reported independently of the measurement report, or may be included in the measurement report and reported to the network device.

The specific configuration of the first reporting manner may be preconfigured in the terminal device, or may be determined by the terminal device based on an actual requirement, or may be delivered by the network device to the terminal device.

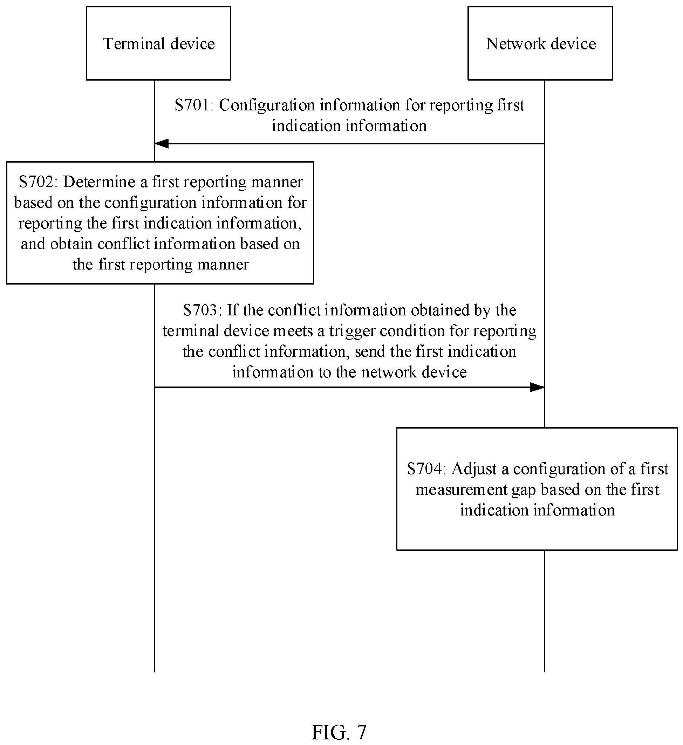

The specific configuration of the first reporting manner being delivered by the network device to the terminal device is used as an example. FIG. 7 is a schematic flowchart of another measurement time configuration method according to an embodiment of this application. As shown in FIG. 7, the method may include the following steps.

S701: A network device sends, to a terminal device, configuration information for reporting first indication information.

Correspondingly, the terminal device receives the configuration information sent by the network device for reporting the first indication information.

The configuration information for reporting the first indication information includes second indication information indicating a first quantity threshold and/or first preset duration, and/or third indication information indicating the terminal device to report the first indication information in a first reporting manner. Optionally, the second indication information and the third indication information may be same indication information (for example, configuration information for reporting the first indication information, where the configuration information includes the second indication information and the third indication information); or the second indication information and the third indication information may be different indication information. When the second indication information and the third indication information are different indication information, the network device may send the second indication information and the third indication information to the terminal device at the same time, or may sequentially send the second indication information and the third indication information. A sending sequence of the second indication information and the third indication information is not limited in this application.

For the second indication information:
In a possible implementation, the second indication information includes a specific configuration of the first quantity threshold and/or the first preset duration. For example, the second indication information includes a value of the first quantity threshold and/or a value of the first preset duration. Alternatively, the second indication information includes a value of the first quantity threshold and/or a timer, and duration of the timer is the same as the first preset duration. Optionally, the second indication information may further include a preset quantity, and the preset quantity is used to determine a quantity of measurement periods included in a range of conflict information (where if the preset quantity is 2, the range of the conflict information includes two measurement periods).

In another possible implementation, the second indication information includes an identifier of the first quantity threshold and/or the first preset duration. The first quantity threshold is used as an example. The terminal device may determine, from a prestored first quantity threshold list based on the identifier of the first quantity threshold indicated by the second indication information, the first quantity threshold corresponding to the identifier. The first quantity threshold list and/or the first preset duration may be a list preset in the terminal device, or may be a list pre-obtained by the terminal device from the network device and stored by the terminal device.

For the third indication information:
In a possible implementation, the third indication information includes a specific configuration of the first reporting manner. For example, the third indication information includes content of a first sub-reporting manner and/or content of a second sub-reporting manner.

In another possible implementation, the third indication information includes an identifier of the first reporting manner. The terminal device may determine, from a prestored candidate reporting manner list based on the identifier of the first reporting manner indicated by the third indication information, the first reporting manner corresponding to the identifier. Alternatively, the third indication information includes an identifier of the first sub-reporting manner and/or an identifier of the second sub-reporting manner, and the terminal device may determine, from a prestored candidate first sub-reporting manner list based on the identifier of the first sub-reporting manner indicated by the third indication information, the first sub-reporting manner corresponding to the identifier, and/or determine, from a prestored candidate second sub-reporting manner list based on the identifier of the second sub-reporting manner indicated by the third indication information, the second sub-reporting manner corresponding to the identifier; and then determine the first reporting manner based on the first sub-reporting manner and/or the second sub-reporting manner.

In this implementation, the candidate reporting manner list, the candidate first reporting manner list, and/or the candidate second reporting manner list may be a list preset in the terminal device, or may be a list pre-obtained by the terminal device from the network device and stored by the terminal device. The list pre-obtained from the network device and stored is used as an example. The network device may send fourth indication information to the terminal device in advance, where the fourth indication information includes the candidate reporting manner list, the candidate first reporting manner list, and/or the candidate second reporting manner list. After obtaining the fourth indication information, the terminal device may prestore these lists. Optionally, the network device may alternatively enable the terminal device to update the prestored candidate reporting manner list, the candidate first reporting manner list, and/or the candidate second reporting manner list at any time based on an actual requirement.

Optionally, after selecting the first reporting manner from the candidate manner list preconfigured in the terminal device, the terminal device may alternatively feed back, to the network device, the first reporting manner selected by the terminal device, so that the network device learns of the reporting manner in which the terminal device reports the first indication information.

S702: The terminal device determines the first reporting manner based on the configuration information for reporting the first indication information, and obtains the conflict information based on the first reporting manner.

The first reporting manner includes the first sub-reporting manner indicating a range of the conflict information and the second sub-reporting manner indicating a trigger condition for the terminal device to report the conflict information.

S703: If the conflict information obtained by the terminal device meets the trigger condition for reporting the conflict information, send the first indication information to the network device. Correspondingly, the network device receives the first indication information sent by the terminal device.

The first indication information indicates conflict information of a first measurement time that overlaps transmission.

S704: The network device adjusts a configuration of the first measurement time based on the first indication information.

According to the method provided in this embodiment of this application, in a plurality of manners of reporting the first indication information, a plurality of requirements of the network device for adjusting the configuration of the first measurement time can be met, so that the network device improves accuracy of adjusting the configuration of the first measurement time based on the first indication information, thereby improving accuracy of adjusting the configuration of the first measurement time, and mitigating impact of the measurement time on the transmission more efficiently.

In addition, in the method provided in this application, the range of the conflict information indicated by the first indication information reported by the terminal device may alternatively be indicated by using a corresponding service type of the transmission. For example, the terminal device collects the conflict information and reports the corresponding first indication information to the network device only when there is a conflict between transmission of a service type with a higher priority and the measurement time. When a priority of the service type corresponding to the transmission is low, the terminal device does not perform reporting. Alternatively, the terminal device collects the conflict information and reports the corresponding first indication information to the network device only when there is a conflict between transmission of a service type that has a high delay requirement and the measurement time. When a service delay requirement of the service type corresponding to the transmission is low, the terminal device does not perform reporting or the like.

In this implementation, the network device may further send fifth indication information to the terminal device, to indicate a service type for which the conflict information needs to be reported. The fifth indication information may directly indicate the service type or a service identifier for which the conflict information needs to be reported, or indicate a first logical channel group corresponding to the service type for which the conflict information needs to be reported, to indirectly indicate the service type for which the conflict information needs to be reported.

It should be understood that the second indication information, the third indication information, the fourth indication information, and the fifth indication information may be four pieces of independent indication information, or may be any at least two pieces of indication information integrated together. If the four pieces of indication information are integrated into one piece of indication information, at least two pieces of indication information corresponding to the four pieces of indication information may be delivered by the network device at the same time or sequentially. This is not limited in this application.

According to the method provided in this embodiment of this application, the terminal device reports, to the network device by further determining and filtering the service type of the transmission, only conflict information of a service type whose conflict information needs to be reported, instead of reporting conflict information of all the transmission, thereby reducing workload of adjusting the configuration of the first measurement time by the network device, improving efficiency of adjusting the configuration of the first measurement time by the network device, better meeting a requirement of a user for service data transmission, and improving user experience.

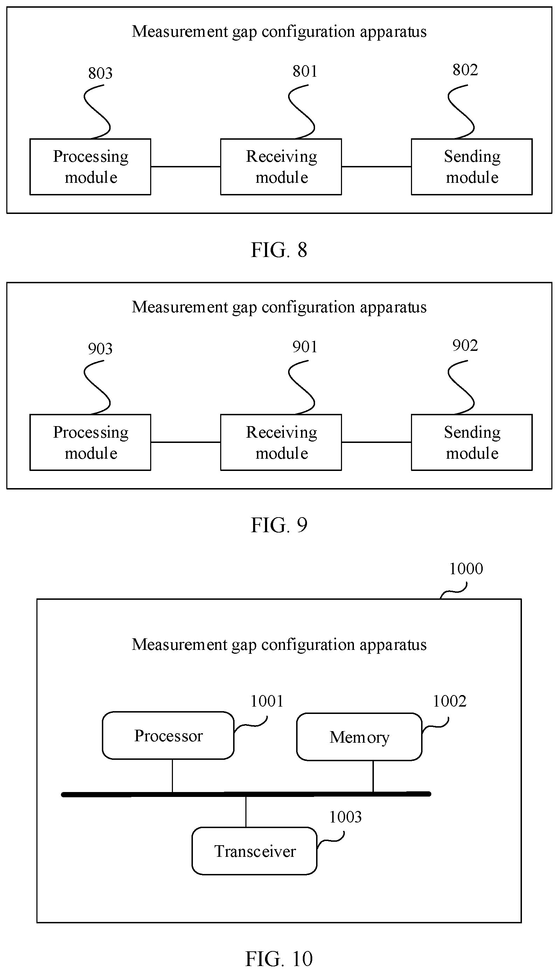

FIG. 8 is a diagram of a structure of a measurement time configuration apparatus according to an embodiment of this application. It may be understood that the measurement time configuration apparatus may correspondingly implement operations or steps corresponding to the network device in the foregoing method embodiments. The measurement time configuration apparatus may be a network device, or may be a component, for example, a chip or a chip module, that may be configured in the network device. As shown in FIG. 8, the measurement time configuration apparatus may include a receiving module 801. In a possible implementation, the apparatus may further include a sending module 802 and a processing module 803. Optionally, the receiving module 801 and the sending module 802 may be integrated into a transceiver module, or may be separated from each other.

The receiving module 801 is configured to receive first indication information from a terminal device, where the first indication information indicates conflict information of a first measurement time, and the conflict information indicates that the first measurement time overlaps transmission.

Optionally, the transmission is uplink transmission or downlink transmission; and when the transmission is the downlink transmission, the transmission includes a discontinuous reception DRX active time.

Optionally, the first indication information includes at least one of the following: a conflict indication, a quantity of first measurement times, the first measurement time, a maximum quantity of conflicts, and a period to which the first measurement time belongs.

Optionally, the first indication information further includes at least one of the following: a transmission period, jitter information, and BAT information.

Optionally, the first indication information includes a bitmap, and one bit in the bitmap corresponds to one measurement time in the transmission period; and when a value of the bit is a first value, it indicates that the measurement time corresponding to the bit does not conflict with the transmission; or when a value of the bit is a second value, it indicates that the measurement time corresponding to the bit conflicts with the transmission.

Optionally, the sending module 802 is further configured to send third indication information to the terminal device, where the third indication information indicates the first reporting manner.

Optionally, the sending module 802 is configured to send second indication information to the terminal device, where the second indication information indicates the first quantity threshold, the first preset duration, the preset quantity, and/or the preset quantity of measurement periods. Optionally, the receiving module 801 is specifically configured to receive the first indication information reported by the terminal device in the first reporting manner.

Optionally, the first reporting manner includes a first sub-reporting manner, the first sub-reporting manner indicates a range of the conflict information, and the range of the conflict information includes conflict information within the first preset duration; a range of the conflict information includes conflict information in one measurement period; a range of the conflict information includes conflict information in a preset quantity of measurement periods, and the preset quantity is greater than or equal to 2; or a range of the conflict information includes conflict information in a first measurement period within second preset duration, and the first measurement period is a measurement period in which a quantity of conflicts is greater than or equal to a first conflict threshold or a measurement period in which a quantity of conflicts is less than or equal to a second conflict threshold.

Optionally, the first reporting manner includes a second sub-reporting manner, the second sub-reporting manner indicates a trigger condition for the terminal device to report the conflict information, and the trigger condition includes at least one of the following: a quantity of conflicts is greater than or equal to the first quantity threshold; there is a conflicting measurement time in a measurement period; duration reaches the first preset duration; the preset quantity of measurement periods has elapsed; or the conflict information is different from conflict information indicated by previous first indication information.

Optionally, the second indication information includes a timer, and duration of the timer is the same as the first preset duration.

Optionally, the third indication information includes an identifier of the first reporting manner.

Optionally, the sending module 802 is further configured to send fourth indication information to the terminal device, where the fourth indication information includes a candidate reporting manner list, and the candidate reporting manner list includes the first reporting manner.

Optionally, the sending module 802 is further configured to send fifth indication information to the terminal device, where the fifth indication information indicates the terminal device to report conflict information related to a first logical channel group.

Optionally, the processing module 803 is configured to adjust a configuration of the first measurement time based on the first indication information.

Optionally, before the receiving module 801 receives the first indication information from the terminal device, the sending module 802 is further configured to send sixth indication information to the terminal device, where the sixth indication information indicates the terminal device to configure at least two measurement times in the measurement period.

The measurement time configuration apparatus provided in this embodiment may execute actions of the network device in the foregoing method embodiments. An implementation principle and technical effect of the apparatus are similar. Details are not described herein again.

FIG. 9 is a diagram of a structure of another measurement time configuration apparatus according to an embodiment of this application. It may be understood that the measurement time configuration apparatus may correspondingly implement operations or steps corresponding to the terminal device in the foregoing method embodiments. The measurement time configuration apparatus may be a terminal device, or may be a component, for example, a chip or a chip module, that may be configured in the terminal device. As shown in FIG. 9, the measurement time configuration apparatus may include a sending module 901 and a receiving module 902. In a possible implementation, the apparatus further includes a processing module 903. Optionally, the sending module 901 and the receiving module 902 may be integrated into a transceiver module, or may be separated from each other.

The sending module 901 is configured to send first indication information to a network device, where the first indication information indicates conflict information of a first measurement time, and the conflict information indicates that the first measurement time overlaps transmission.

Optionally, the transmission is uplink transmission or downlink transmission; and when the transmission is the downlink transmission, the transmission includes a discontinuous reception DRX active time.

Optionally, the first indication information includes at least one of the following: a conflict indication, a quantity of first measurement times, the first measurement time, a maximum quantity of conflicts, and a period to which the first measurement time belongs.

Optionally, the first indication information further includes at least one of the following: a transmission period, jitter information, and BAT information.

Optionally, the first indication information includes a bitmap, and one bit in the bitmap corresponds to one measurement time in the transmission period; and
when a value of the bit is a first value, it indicates that the measurement time corresponding to the bit does not conflict with the transmission; or
when a value of the bit is a second value, it indicates that the measurement time corresponding to the bit conflicts with the transmission.

Optionally, the receiving module 902 is further configured to receive third indication information from the network device, where the third indication information indicates the first reporting manner.

Optionally, the receiving module 902 is configured to receive second indication information from the network device, where the second indication information indicates the first quantity threshold, the first preset duration, the preset quantity, and/or the preset quantity of measurement periods.

Optionally, the sending module 901 is specifically configured to send the first indication information to the network device in the first reporting manner.

Optionally, the first reporting manner includes a first sub-reporting manner, the first sub-reporting manner indicates a range of the conflict information, and the range of the conflict information includes conflict information within the first preset duration; a range of the conflict information includes conflict information in one measurement period; a range of the conflict information includes conflict information in a preset quantity of measurement periods, and the preset quantity is greater than or equal to 2; or a range of the conflict information includes conflict information in a first measurement period within second preset duration, and the first measurement period is a measurement period in which a quantity of conflicts is greater than or equal to a first conflict threshold or a measurement period in which a quantity of conflicts is less than or equal to a second conflict threshold.

Optionally, the first reporting manner includes a second sub-reporting manner, the second sub-reporting manner indicates a trigger condition for the terminal device to report the conflict information, and the trigger condition includes at least one of the following: a quantity of conflicts is greater than or equal to the first quantity threshold; there is a conflicting measurement time in a measurement period; duration reaches the first preset duration; the preset quantity of measurement periods has elapsed; or the conflict information is different from conflict information indicated by previous first indication information.

Optionally, the second indication information includes a timer, and duration of the timer is the same as the first preset duration.

Optionally, the second indication information includes an identifier of the first reporting manner. Optionally, the receiving module 902 is further configured to receive fourth indication information from the network device, where the fourth indication information includes a candidate reporting manner list, and the candidate reporting manner list includes the first reporting manner.

Optionally, the receiving module 902 is further configured to receive fifth indication information from the network device, where the fifth indication information indicates the terminal device to report conflict information related to a first logical channel group.

Optionally, before the sending module 901 sends the first indication information to the network device, the receiving module 902 is further configured to receive sixth indication information sent by the network device, where the sixth indication information indicates the terminal device to configure at least two measurement times in the measurement period. The processing module 903 is configured to configure the at least two measurement times in the measurement period based on the sixth indication information.

The measurement time configuration apparatus provided in this embodiment may execute actions of the terminal device in the foregoing method embodiments. An implementation principle and technical effect of the apparatus are similar. Details are not described herein again. Optionally, the measurement time configuration apparatus may further include at least one storage module. The storage module may include data and/or an instruction, and another module (for example, a receiving module, a sending module, and a processing module) in the measurement time configuration apparatus may read the data and/or the instruction in the storage module, to implement the corresponding method.

It should be understood that in the foregoing embodiments, the sending module may be a transmitter during actual implementation, and the receiving module may be a receiver during actual implementation; or the sending module and the receiving module are implemented through a transceiver, or the sending module and the receiving module are implemented through a communication port. The processing module may be implemented in a form of software invoked by a processing element, or implemented in a form of hardware. For example, the processing module may be at least one separately disposed processing element, or may be integrated into a chip of the foregoing apparatus for implementation. In addition, the processing module may alternatively be stored in a memory of the foregoing apparatus in a form of program code, and may be invoked by a processing element of the foregoing apparatus to perform a function of the foregoing processing module. In addition, all or some of the modules may be integrated together, or may be implemented independently. The processing element herein may be an integrated circuit, and may have a signal processing capability. In an implementation process, steps in the foregoing methods or the foregoing modules can be implemented by using a hardware integrated logic circuit in the processor element, or by using an instruction in a form of software.

For example, the foregoing modules may be one or more integrated circuits configured to implement the foregoing methods, for example, one or more application-specific integrated circuits (application-specific integrated circuit, ASIC), or one or more digital signal processors (digital signal processor, DSP), or one or more field programmable gate arrays (field programmable gate array, FPGA). For another example, when the foregoing module is implemented in a form of invoking program code by a processing element, the processing element may be a general-purpose processor, for example, a central processing unit (central processing unit, CPU) or another processor that can invoke the program code. For another example, these modules may be integrated together and implemented in a form of a system-on-a-chip (system-on-a-chip, SOC).

FIG. 10 is a diagram of a structure of still another measurement time configuration apparatus according to an embodiment of this application. As shown in FIG. 10, the measurement time configuration apparatus 1000 may include at least one processor 1001, a memory 1002, and a transceiver 1003. The processor 1001, the transceiver 1003, and the memory 1002 communicate with each other through an internal connection path. The memory 1002 is configured to store an instruction. The processor 1001 is configured to execute the instruction stored in the memory 1002, to control the transceiver 1003 to send indication information and/or receive indication information.

The measurement time configuration apparatus may be, for example, the foregoing network device or the foregoing terminal device.

It should be understood that the measurement time configuration apparatus may correspond to the terminal device in the foregoing method embodiments, or may correspond to the network device in the foregoing method embodiments; and may be configured to perform steps and/or procedures performed by the terminal device or the network device in the foregoing method embodiments. Optionally, the memory 1002 may include a read-only memory and a random access memory, and provide an instruction and data for the processor 1001. A part of the memory 1002 may further include a non-volatile random access memory. The memory 1002 may be an independent component, or may be integrated into the processor 1001. The processor 1001 may be configured to execute the instruction stored in the memory 1002. When the processor 1001 executes the instruction stored in the memory, the processor 1001 is configured to perform the steps and/or procedures in the foregoing method embodiments.

The transceiver 1003 may include a transmitter and a receiver. The transceiver 1003 may further include an antenna. There may be one or more antennas. The processor 1001, the memory 1002, and the transceiver 1003 may be components integrated into different chips. For example, the processor 1001 and the memory 1002 may be integrated into a baseband chip, and the transceiver 1003 may be integrated into a radio frequency chip. Alternatively, the processor 1001, the memory 1002, and the transceiver 1003 may be components integrated into a same chip. This is not limited in this application.

Optionally, the measurement time configuration apparatus is a component, for example, a chip or a chip system, configured in a terminal device or a network device.

Alternatively, the transceiver 1003 may be a communication interface, for example, an input interface and/or an output interface or a circuit. The transceiver 1003, the processor 1001, and the memory 1002 may be integrated into a same chip, for example, integrated into the baseband chip.

It should be understood that the foregoing measurement time configuration apparatus may be one or more chips. For example, the measurement time configuration apparatus may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processor (digital signal processor, DSP), a microcontroller unit (microcontroller unit, MCU), a programmable logic device (programmable logic device, PLD), or another integrated chip.

In an implementation process, the steps in the foregoing method may be implemented by using a hardware integrated logic circuit in the processor, or by using an instruction in a form of software. The steps of the method disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor. To avoid repetition, details are not described herein again.

It should be noted that the processor in embodiments of this application may be an integrated circuit chip, and may have a signal processing capability. In an implementation process, the steps in the foregoing method embodiments may be implemented by using a hardware integrated logic circuit in the processor, or by using an instruction in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor.

It may be understood that the memory in embodiments of this application may be a volatile memory or a non-volatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory described in this application is intended to include but is not limited to these memories and any memory of another proper type.

An embodiment of this application further provides a measurement time configuration system. The system includes the terminal device and the network device in the foregoing embodiments. This application further provides a chip. The chip stores a computer program. When the computer program is executed by the chip, the method in the foregoing embodiments is implemented.

This application further provides a computer-readable storage medium. The computer-readable storage medium may include: various media that can store program code, such as a USB flash drive, a removable hard disk, a read-only memory (ROM, Read-Only Memory), a random access memory (RAM, Random Access Memory), a magnetic disk, or an optical disc. Specifically, the computer-readable storage medium stores a program instruction. When the program instruction is executed, the method in the foregoing embodiments is implemented.

This application further provides a computer program product. The program product includes an executable instruction, and the executable instruction is stored in a readable storage medium. At least one processor of a communication device may read the executable instruction from the readable storage medium, and the at least one processor executes the executable instruction, so that the communication device implements the measurement time configuration method provided in the foregoing implementations.

Finally, it should be noted that the foregoing embodiments are merely intended for describing the technical solutions of this application other than limiting this application. Although this application is described in detail with reference to the foregoing embodiments, persons of ordinary skill in the art shall understand that they may still make modifications to the technical solutions described in the foregoing embodiments or make equivalent replacements to some or all technical features thereof, without departing from the scope of the technical solutions of the embodiments of this application.

## Claims

1. A measurement time configuration method, comprising:
receiving first indication information from a terminal device, wherein the first indication information indicates conflict information of a first measurement time, and the conflict information indicates that the first measurement time overlaps transmission.

2. The method according to claim 1, wherein the transmission is uplink transmission or downlink transmission; and when the transmission is the downlink transmission, the transmission comprises a discontinuous reception DRX active time.

3. The method according to claim 1 or 2, wherein the first indication information comprises at least one of the following: a conflict indication, a quantity of first measurement times, the first measurement time, a maximum quantity of conflicts, and a period to which the first measurement time belongs.

4. The method according to any one of claims 1 to 3, wherein the first indication information further comprises at least one of the following: a transmission period, jitter information, and BAT information.

5. The method according to any one of claims 1 to 3, wherein the first indication information comprises a bitmap, and one bit in the bitmap corresponds to one measurement time in the transmission period; and
when a value of the bit is a first value, it indicates that the measurement time corresponding to the bit does not conflict with the transmission; or
when a value of the bit is a second value, it indicates that the measurement time corresponding to the bit conflicts with the transmission.

6. The method according to claim 5, wherein the method further comprises:
sending third indication information to the terminal device, wherein the third indication information indicates the first reporting manner.

7. The method according to claim 6, further comprising:
sending second indication information to the terminal device, wherein the second indication information indicates the first quantity threshold, the first preset duration, the preset quantity, and/or the preset quantity of measurement periods.

8. The method according to any one of claims 1 to 7, wherein receiving the first indication information from the terminal device comprises:
receiving the first indication information reported by the terminal device in the first reporting manner.

9. The method according to claim 8, wherein the first reporting manner comprises a first sub-reporting manner, the first sub-reporting manner indicates a range of the conflict information, and the range of the conflict information comprises conflict information within the first preset duration;
a range of the conflict information comprises conflict information in one measurement period;
a range of the conflict information comprises conflict information in a preset quantity of measurement periods, and the preset quantity is greater than or equal to 2; or
a range of the conflict information comprises conflict information in a first measurement period within second preset duration, and the first measurement period is a measurement period in which a quantity of conflicts is greater than or equal to a first conflict threshold or a measurement period in which a quantity of conflicts is less than or equal to a second conflict threshold.

10. The method according to claim 8, wherein the first reporting manner comprises a second sub-reporting manner, the second sub-reporting manner indicates a trigger condition for the terminal device to report the conflict information, and the trigger condition comprises at least one of the following:
a quantity of conflicts is greater than or equal to the first quantity threshold;
there is a conflicting measurement time in a measurement period;
duration reaches the first preset duration; or
the conflict information is different from conflict information indicated by previous first indication information.

11. The method according to claim 10, wherein the second indication information comprises a timer, and duration of the timer is the same as the first preset duration.

12. The method according to claim 11, wherein the third indication information comprises an identifier of the first reporting manner.

13. The method according to claim 12, wherein the method further comprises:
sending fourth indication information to the terminal device, wherein the fourth indication information comprises a candidate reporting manner list, and the candidate reporting manner list comprises the first reporting manner.

14. The method according to claim 13, wherein the method further comprises:
sending fifth indication information to the terminal device, wherein the fifth indication information indicates the terminal device to report conflict information related to a first logical channel group.

15. The method according to claim 14, wherein the method further comprises:
adjusting a configuration of the first measurement time based on the first indication information.

16. The method according to any one of claims 1 to 15, wherein before receiving the first indication information from the terminal device, the method further comprises:
sending sixth indication information to the terminal device, wherein the sixth indication information indicates configuration information of at least two measurement times in the measurement period.

17. A measurement time configuration method, comprising:
sending first indication information to a network device, wherein the first indication information indicates conflict information of a first measurement time, and the conflict information indicates that the first measurement time overlaps transmission.

18. The method according to claim 17, wherein the transmission is uplink transmission or downlink transmission; and when the transmission is the downlink transmission, the transmission comprises a discontinuous reception DRX active time.

19. The method according to claim 17 or 18, wherein the first indication information comprises at least one of the following: a conflict indication, a quantity of first measurement times, the first measurement time, a maximum quantity of conflicts, and a period to which the first measurement time belongs.

20. The method according to any one of claims 17 to 19, wherein the first indication information further comprises at least one of the following: a transmission period, jitter information, and burst arrival time information.

21. The method according to any one of claims 17 to 19, wherein the first indication information comprises a bitmap, and one bit in the bitmap corresponds to one measurement time in the transmission period; and
when a value of the bit is a first value, it indicates that the measurement time corresponding to the bit does not conflict with the transmission; or
when a value of the bit is a second value, it indicates that the measurement time corresponding to the bit conflicts with the transmission.

22. The method according to claim 21, wherein the method further comprises:
receiving third indication information from the network device, wherein the third indication information indicates the first reporting manner.

23. The method according to claim 22, further comprising:
receiving second indication information from the network device, wherein the second indication information indicates the first quantity threshold, the first preset duration, the preset quantity, and/or the preset quantity of measurement periods.

24. The method according to any one of claims 17 to 23, wherein sending the first indication information to the network device comprises:
sending the first indication information to the network device in the first reporting manner.

25. The method according to claim 24, wherein the first reporting manner comprises a first sub-reporting manner, the first sub-reporting manner indicates a range of the conflict information, and the range of the conflict information comprises conflict information within the first preset duration;
a range of the conflict information comprises conflict information in one measurement period;
a range of the conflict information comprises conflict information in a preset quantity of measurement periods, and the preset quantity is greater than or equal to 2; or
a range of the conflict information comprises conflict information in a first measurement period within second preset duration, and the first measurement period is a measurement period in which a quantity of conflicts is greater than or equal to a first conflict threshold or a measurement period in which a quantity of conflicts is less than or equal to a second conflict threshold.

26. The method according to claim 24, wherein the first reporting manner comprises a second sub-reporting manner, the second sub-reporting manner indicates a trigger condition for the terminal device to report the conflict information, and the trigger condition comprises at least one of the following:
a quantity of conflicts is greater than or equal to the first quantity threshold;
there is a conflicting measurement time in a measurement period;
duration reaches the first preset duration;
the preset quantity of measurement periods has elapsed; or
the conflict information is different from conflict information indicated by previous first indication information.

27. The method according to claim 26, wherein the second indication information comprises a timer, and duration of the timer is the same as the first preset duration.

28. The method according to claim 27, wherein the second indication information comprises an identifier of the first reporting manner.

29. The method according to claim 28, wherein the method further comprises:
receiving fourth indication information from the network device, wherein the fourth indication information comprises a candidate reporting manner list, and the candidate reporting manner list comprises the first reporting manner.

30. The method according to claim 29, wherein the method further comprises:
receiving fifth indication information from the network device, wherein the fifth indication information indicates the terminal device to report conflict information related to a first logical channel group.

31. The method according to any one of claims 17 to 30, wherein before sending the first indication information to the network device, the method further comprises:
receiving sixth indication information sent by the network device, wherein the sixth indication information indicates configuration information of at least two measurement times in the measurement period; and performing measurement based on the sixth indication information.

32. A measurement time configuration apparatus, wherein the apparatus comprises:
a receiving module, configured to receive first indication information from a terminal device, wherein the first indication information indicates conflict information of a first measurement time, and the conflict information indicates that the first measurement time overlaps transmission.

33. A measurement time configuration apparatus, wherein the apparatus comprises:
a sending module, configured to send first indication information to a network device, wherein the first indication information indicates conflict information of a first measurement time, and the conflict information indicates that the first measurement time overlaps transmission.

34. A measurement time configuration apparatus, wherein the apparatus comprises: a processor, a transceiver, and a memory, wherein the processor is separately communicatively connected to the transceiver and the memory;
the memory stores computer-executable instructions;
the transceiver performs communication interaction with an external device; and
the processor executes the computer-executable instructions stored in the memory, to implement the method according to any one of claims 1 to 16 or any one of claims 17 to 31.

35. A chip, wherein the chip stores a computer program; and when the computer program is executed by the chip, the method according to any one of claims 1 to 16 or any one of claims 17 to 31 is implemented.

36. A computer-readable storage medium, configured to store a computer program, wherein the computer program comprises instructions for implementing the method according to any one of claims 1 to 16 or any one of claims 17 to 31.

37. A computer program product, wherein the computer program product comprises computer program code; and when the computer program code is run on a computer, the computer is enabled to implement the method according to any one of claims 1 to 16 or any one of claims 17 to 31.
